# EUROPEAN PATENT SPECIFICATION

(11) **EP 1 492 102 B1**
(45) Date of publication and mention of the grant of the patent: **22.04.2009**
(21) Application number: 04012009.9
(22) Date of filing: 21.05.2004
(51) Int. Cl.: G11B 7/26

(54) **Method for producing stamper for optical information recording medium**
Verfahren zur Herstellung einer Matrize für optisches Informationsaufzeichnungsmedium
Procédé de fabrication d'une matrice pour support d'enregistrement optique

(30) Priority: 23.06.2003 JP 2003178133
(43) Date of publication of application: 29.12.2004
(73) Proprietor: Panasonic Corporation, Kadoma-shi Osaka 571-8501 (JP)
(72) Inventor: Ito, Eiichi, Nishiinomiya-shi Hyogo-ken (JP); Ohno, Eiji, Hirakata-shi Osaka-fu (JP); Tomiyama, Morio, Ikoma-shi Nara-ken (JP)
(74) Representative: Eisenführ, Speiser & Partner

(56) References cited:
- JP-A- 60 045 956
- US-A- 5 051 340
- US-B1- 6 228 562

## Description

### BACKGROUND OF THE INVENTION

The present invention relates a method for producing a stamper for an optical information recording medium.

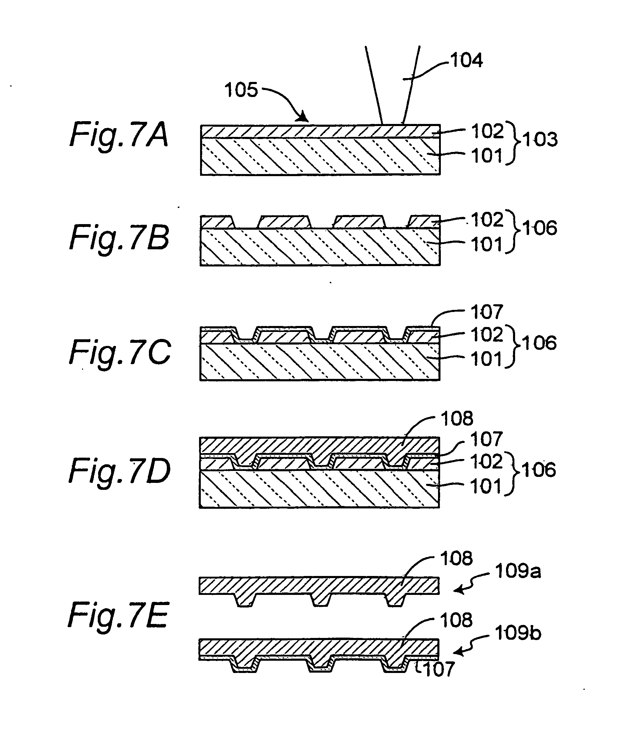

Generally, an optical information recording medium such as an optical disc is produced by a molding process such as injection molding using a stamper having a predetermined concavo-convex pattern. An example of a conventional method for producing the stamper for an optical information recording medium is described with reference to Figs. 7A to 7E.

In the conventional stamper production process, as shown in Fig. 7A, a master substrate 103 having a thin film resist 102 formed on a substrate 101 is firstly subjected to exposure by being irradiated with a laser beam or an electron beam so that a desired pattern including a guide groove and information pits is formed as a latent image 105.

Next, as shown in Fig. 7B, the exposed master substrate 103 is developed so that a master 106 having a concavo-convex pattern is obtained wherein the latent image 105 of the desired pattern is formed into convexities or concavities. In a production process of a master for a DVD or the next-generation optical information recording medium, exposure with an ultraviolet laser and wet etching with an alkaline solution are generally employed.

As shown in Fig. 7C, a conductive film 107 is formed on the master 106 by a sputtering method or an electroless plating. Next, as shown in Fig. 7D, a metal layer 108 is formed by a plating wherein the conductive film 107 is used as an electrode. Next, as shown in Fig. 7E, the metal layer 108 alone or together with the conductive film 107 is peeled off from the master 6. Then, the metal layer 8 is processed for shaping. The shaping process is, for example, a polishing of the rear surface of the metal layer 108 and a punching process. As a result, a stamper 109a without the conductive film 107 or a stamper 109b with the conductive film 107 is completed. Alternatively, another layer may be formed on the metal layer 108 that is peeled from the master 106, by a plating or a 2P method so that the concavo-convex pattern of the metal layer 108 is transferred to the another layer that is to be obtained as a stamper.

A disc substrate for an optical information recording medium is produced by injection molding with use of the stamper 109a or 109b produced in the above described manner. Figs. 7A to 7E illustrate a method for producing a master using a positive photoresist (a photoresist from which the latent image is removed by developing). When a negative photoresist is used, a stamper can be produced according to the same method as the method wherein the positive photoresist is used, except that convexities and concavities on the master are reversed. Alternatively, another layer may be formed on the metal layer 108 that is peeled from the master 106, by a plating or a 2P method so that the concavo-convex pattern of the metal layer 108 is transferred to the layer. In that case, the layer is used as a stamper for producing an optical information recording medium.

In the conventional stamper production process which is described with reference to Fig. 7A to 7E, a photoresist of an organic material is generally used as the resist 102. However, when the photoresist is used as the resist 102, a shape of the photoresist remaining after the developing is not stepwise but slope, because an exposure value is changed not stepwise but continuously at a boundary between an exposed portion and an unexposed portion. This makes it difficult to form a fine concavo-convex pattern using the photoresist. For this reason, it has been proposed that the resist 102 is made from a thermosensitive inorganic material such as a phase change material. Specifically, it has been proposed that a master with a concavo-convex pattern is produced by heating the thermosensitive material so as to cause a phase change of the material due to a temperature rising and then carrying out an etching under a condition that an etching rate of the phase changed portion is different from that of the phase unchanged portion. In the resist of the thermosensitive phase change material, the phase change occur at a portion whose temperature rises to a predetermined temperature by the exposure, the boundary between the phase changed portion and the phase unchanged portion is clearer, since the phase change occurs at a portion whose temperature rises to a predetermined temperature or more by the exposure. For this reason, when the resist of the thermosensitive material is used, it is possible to form a finer pattern with a light having a wavelength compared the pattern formed in the photoresist with the light having the same wavelength (for example, see see Japanese Patent Kokai (Raid-Open) Publication No. 10-97738-A(1998)).

As described above, a stamper with a fine concavo-convex pattern can be produced by using a thermosensitive material as a resist. However, it has been found that when the thermosensitive material is used as the resist for the stamper in the conventional stamper production process, the material causes disadvantages as follow. Conventionally, the photoresist used for producing the stamper for optical information recording medium is made from an organic material such as a novolak resin and PMMA. Such photoresist generally presents high stability during the formation of the metal layer by plating. On the contrary, the thermosensitive material such as phase change material is generally an inorganic material. During the formation of the metal layer by a plating, the inorganic material tends to react with the conductive film or the metal layer formed by the plating, and to decompose electrically. The reaction of the inorganic material with other material causes defects of the concavo-convex pattern of the master, resulting in a formation of an unwanted concavo-convex pattern in the metal layer. As described above, the master having the resist of the inorganic material causes a problem that the metal layer formation which accompanies electric conduction (that is, plating) cannot be favorably completed.

In the light of the above-described situation, the present invention has been developed, and the object of the present invention is to provide a method for producing a stamper for an optical information recording medium which enables resist to be formed from an inorganic material and to prevent the inorganic material from reacting with the conductive film and the metal layer and dissolving electrically during the formation of the metal layer by the plating, whereby an excellent metal layer is formed.

US-A-5 051 340 discloses a method for producing a stamper for an optical information recording medium according to the preamble of claim 1.

### SUMMARY OF THE INVENTION

The present invention provides a first method for producing a stamper for an optical information recording medium (which is merely referred to as a "stamper") which includes (i) producing a master having a concavo-convex pattern by exposing and developing a master substrate including a resist of inorganic material formed on a substrate; (ii) forming an organic layer on the concavo-convex pattern of the master; (iii) forming a conductive film on the organic layer; (iv) forming a metal layer on the conductive film; and (v) peeling off the metal layer alone or the metal layer together with the conductive film from the master.

This production method is characterized in that the organic layer is formed between the resist and the conductive film. Herein, the "organic layer" means a layer which includes an organic material as a main component. This organic layer serves to separate the resist from the conductive film physically and thereby to prevent chemical reaction of the resist with the conductive film. Further, since the organic material generally has low electrical conductivity, the organic layer also serves to separate electrically (that is, to insulate) the resist from the conductive film, and thereby to suppress the electrically accelerated decomposition reaction of the resist which reaction is accelerated and the electrically accelerated chemical reaction of the resist with the conductive film.

The present invention provides a second method according to the first method, which is characterized in that the inorganic material used for producing the master substrate is a thermosensitive material whose state is changed by a temperature change due to the exposure. Herein, the "thermosensitive material" means a material whose state is changed by a temperature change (specifically, temperature rising) caused by an exposure. Herein, "state of a material is changed" means that chemical property and/or physical property of the thermosensitive material is changed. The term "state-changed portion" is, for example, a phase-changed portion or a thermally cross-linked portion. Further, in this specification, the term "exposure" is used in the sense that it includes not only light irradiation, but also other beam irradiation such as electron beam irradiation.

The present invention provides a third method according to the first or the second method, which is characterized in that the metal layer is formed by a plating. The method of the present invention is aimed at solving the problem of the conventional production method, particularly the problem which arises during the plating. Therefore, it is particularly preferable to apply the method of the present invention when the metal layer is formed by a plating.

The present invention provides a fourth method according to any one of the first to the third methods, which is characterized in that the organic layer is formed by a spin coat method. The spin coat method enables a layer containing an organic material to be formed efficiently. When the organic layer is formed by the spin coat method, the organic layer preferably contains, for example, a phenol resin, an acrylic resin, or a styrene resin. Alternatively, the organic resin may be formed from a photoresist whose main component is a phenol resin or an acrylic resin. When the organic resin is made by the spin coat method using any one of these resins and photoresist, the thickness of the organic layer is preferably in a range of 5 nm to 60 nm and more preferably in a range of 15 nm to 40 nm. When the thickness of the organic layer is below 5 nm, it is difficult to separate the resist from the conductive film physically and electrically. When the thickness of the organic layer is larger than 60 nm, the organic layer may not be formed uniformly over the entire master, resulting in a nonuniform concavo-convex pattern on the final stamper.

The present invention provides a fifth method according to any one of the first to the third methods, which is characterized in that the organic layer is formed by a vacuum process. The vacuum process may be, for example, vacuum deposition or sputtering. The vacuum process is preferably used because the degree of flattening of the concavo-convex pattern caused by the organic layer formation can be smaller. When the vacuum deposition is employed as the vacuum process, the organic layer may preferably contain, for example, a phenol resin, an acrylic resin, a styrene resin, a polyamide resin, a polyimide resin, a polyurea, or a polyurethane. When the organic layer is formed using any one of these resins, the thickness of the organic layer is preferably in a range of 5 nm to 60 nm, and more preferably in a range of 15 nm to 60 nm. The problems which may arise when the thickness of the organic layer is too small or too large, are as described in connection with the organic layer formed by the spin coat method.

In the fifth method, a vapor deposition polymerization method may be used as the vacuum deposition method. In this case, the organic layer may preferably contain, for example, a polyimide, a polyurea, or a polyurethane. The vapor deposition polymerization method is preferably used since the degree of flattening of the concavo-convex pattern caused by the formation of the organic layer can be further reduced. When the organic layer containing any one of these resins is formed by the vapor deposition polymerization method, the thickness of the organic layer is preferably in a range of 3 nm to 100 nm, and more preferably in a range of 10 nm to 100 nm. The problems which may arise when the thickness of the organic layer is too small or too large, are as described in connection with the organic layer formed by the spin coat method.

The present invention provides a sixth method according to any one of the first to the fifth methods, which is characterized in that the inorganic material of the resist contains, as a main component, at least one material selected from the group consisting of elements such as Ge, Te, Sb, Se and Mo and mixtures thereof, and compounds of these elements and mixtures thereof. Herein, the compounds specifically include oxides, nitrides and sulfides of these elements. The compound is preferably the oxide. Since a state change (for example, a phase change) of these materials occurs when the temperature of theses materials is raised, the inorganic material containing one or more of these materials is preferably used as a thermosensitive material. The resist may further include at least one inorganic material selected from the group consisting of Au, Pt, Cu, Ag, Pd, and Si.

The present invention provides a seventh method according to any one of the first to the sixth methods, which is characterized in that a height of the concavo-convex pattern formed in the stamper is in the range of 12 nm to 85 nm. Herein, the "height of the concavo-convex pattern" means a distance between a plane parallel to the principal surface of the stamper which plane passes the bottom of concavities and a plane parallel to the principal surface of the stamper which plane passes the top of convexities. When there are concavities of different depths, a mean value of the depths is used as a basis (that is, the bottom) for determining the height of the concavo-convex pattern. Similarly, when there are convexities of different heights, a mean value of the heights is used as a basis (that is, the top) for determining the height of the concavo-convex pattern. The mean value of depths of concavities may be determined by, for example, measuring the depth of each concavity in a cross section taken along a radius of the stamper. Alternatively, the mean value of depths of concavities may be determined by measuring the depth of each concavity within any area (for example, 1 centimeters square). The mean value of heights of convexities may be determined in a similar manner. Specifically, the height of the concavo-convex pattern corresponds to a height of convexities in the stamper when the stamper is formed using the positive photoresist, whereas it corresponds to a depth of concavities when the stamper is formed using the negative photoresist. According to the method of the present invention, it is possible to control the height of the concavo-convex pattern in the final stamper in this range by selecting the height of the concavo-convex pattern in the master on which the organic layer is not formed, and the thickness and the production method of the organic layer. Thus, the production method of the present invention makes it possible to obtain a stamper which enables a desired shape (including height) of a concavo-convex pattern to be formed in a substrate for an optical information recording medium.

The present invention provides a eight method according to any one of the first to the seventh methods, which is characterized in that the conductive film is formed by electroless plating. Electroless plating is preferably employed as a method for forming the conductive film on a surface of the organic layer having a low electrical conductivity. Further, the conductive film formed by the electroless plating adheres to the organic layer with a lower adhesion strength compared with the conductive film formed by the sputtering method or the vacuum deposition method. Therefore, the electroless plating has an advantage that there is less residue of the organic layer on the surface of the conductive film of the stamper that is obtained by peeling off the metal layer together with the conductive film.

According to the stamper production method of the present invention, the organic layer protects the resist of the inorganic material so as to prevent the inorganic material from electrically decomposing as well as reacting with the conductive film and the metal layer, whereby good plating can be realized. Therefore, the method of the present invention makes it possible to produce a stamper by plating a master which has the resist made from the thermosensitive material suitable for forming a fine concavo-convex pattern, without damaging the concavo-convex pattern.

### BRIEF DESCRIPTION OF THE DRAWINGS

A more complete appreciation of the invention and many of the attendant advantages thereof will become readily apparent with reference to the following detailed description, particularly when considered in conjunction with the accompanying drawings, in which:
Figs. 1A to 1F are elevational views in section of a stamper for an optical information recording medium and materials thereof, schematically showing a method for producing a stamper for an optical information recording medium of the present invention;
Fig. 2 is a schematic elevational views of an apparatus for exposing on a master substrate with a recording light;
Fig. 3 is a schematic elevational view in section of a master wherein an organic layer is formed on a concavo-convex pattern;
Fig. 4A is a schematic cross sectional view of an example of a master substrate used in a method for producing a stamper of the present invention, and Figs. 4B to 4H show schematic cross sectional views of master substrates after exposure;
Fig. 5A is a schematic cross sectional view of another example of a master substrate used in a method for producing a stamper of the present invention, and Figs. 5B to 5H show schematic cross sectional views of master substrates after exposure;
Fig. 6 is a schematic cross sectional view of still another example of a master substrate used in a method for producing a stamper of the present invention; and
Figs. 7A to 7E are elevational views in section of a stamper for an optical information recording medium and materials thereof, schematically showing a conventional method for producing a stamper for an optical information recording medium.

### DETAILED DESCRIPTION OF THE PREFERRED EMBODIMENTS

Embodiments of the present invention are described with reference to the drawings. In the following description, a master and a stamper for an optical information recording medium may be merely referred to as a "master" and a "stamper" respectively. Further, the term "recording" may mean forming a state-changed portion by a temperature changing due to an exposure so that the state-changed portion becomes a desired latent image.

### (Embodiment 1)

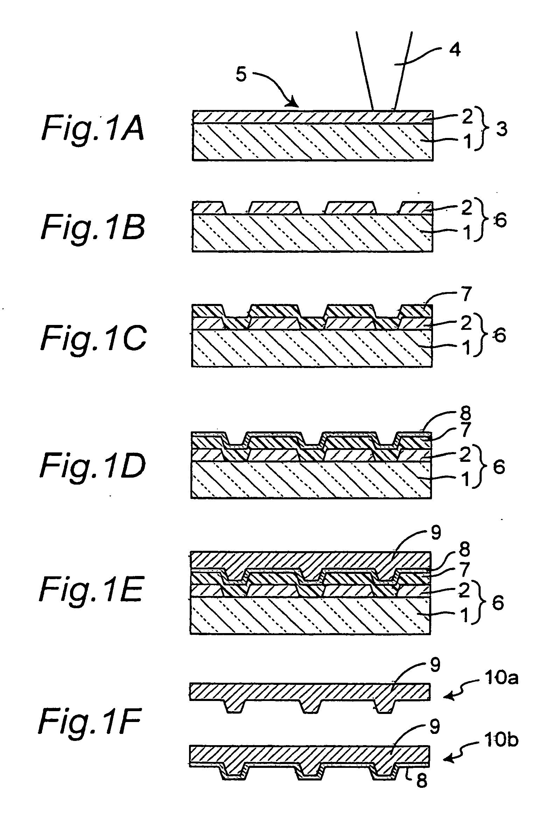

As Embodiment 1, a method for producing a stamper which includes forming an organic layer on a surface of a master by a spin coat method is described with reference to Figs. 1 to 3. Firstly, summary of the stamper production method of Embodiment 1 is described with reference to Figs. 1A to 1F.

Firstly, as shown in Fig. 1A, a master substrate 3 wherein a film-like resist 2 is formed on a substrate 1 is exposed using a recording light 4 such as a laser beam or an electron beam so that a desired pattern such as a guide groove and signal pits is formed as a latent image 5 (an exposure step). The resist 2 includes an inorganic material whose phase is changed by temperature rising due to exposure. Next, as shown in Fig. 1B, the master substrate 3 after the exposure is subjected to a developing treatment, whereby a master 6 having a fine concavo-convex pattern wherein the desired pattern recorded as the latent image 5 is formed into convexities or concavities (a development step). Specifically, the development step is an etching carried out under the condition that an etching rate of a phase-changed portion is different from that of a phase-unchanged portion.

Next, as shown in Fig. 1C, an organic layer 7 is formed on a surface of the master 6 in which surface the concavo-convex pattern is formed (an organic layer formation step). Subsequently, as shown in Fig. 1D, a conductive film 8 is formed by electroless plating (a conductive film formation step). The conductive film 8 may be formed by a sputtering method.

Next, as shown in Fig. 1E, a metal layer 9 is formed on the conductive film 8 (a metal layer formation step). The metal layer 9 is formed by, for example, carrying out plating with use of the conductive film 8 as an electrode. Subsequently, as shown in Fig. 1F, the metal layer 9 alone or the metal layer 9 together with the conductive film 8 is peeled off from the master 6, and then the metal layer 9 is subjected to a shaping process such as polishing of the rear surface of the metal layer 9 and punching process (a peeling step). Thereby, a stamper 10a without the conductive film 8 or a stamper 10b including the conductive film 8, wherein the concavo-convex pattern of the master 6 is transferred (that is, a concavo-convex pattern complementary to the concavo-convex pattern in the master 6 is formed), is completed.

The method for producing a stamper according to Embodiment 1 of the present invention is more specifically described. As a substrate 1 of the master substrate 3, a substrate made from glass, silicon or resin is used. The thickness of the substrate 1 is selected from, for example, a range of 0.4 mm to 10.0 mm, but not limited thereto.

As described above, the resist 2 formed on the substrate 1 preferably contains the inorganic material whose state is changed by the temperature rising caused by the exposure. The state change is, for example, a phase change. The resist 2 may be formed using a material which contains as a main component, for example, Ge, Te, Sb, Se, Mo, Sn, or a mixture thereof, or a compound of any one of these elements or a mixture thereof. The mixture of elements which constitutes the resist 2 is, for example, Sb-Te or Ge-Sb-Te. The compound which constitutes the resist 2 is an oxide, a nitride or a sulfide, and preferably the oxide. The oxide is an oxide which is represented by MOₓ wherein M is one or more elements selected from the group consisting of Ge, Te, Sb, Se, Mo and Sn and 0.3<X<1.7). The inorganic material which contains the above mentioned particular element(s) or compound(s) of the element(s), may further contains Si and/or one or more metals selected from noble metals such as Au, Pt, Cu, Ag and Pd. Herein, the resist 2 of the inorganic material is formed by, for example, a sputtering method, a vacuum deposition method, or a spin coat method. The master substrate 3 may further include another constituent such as an interface layer and a reflective layer, as long as the resist 2 contains the inorganic material.

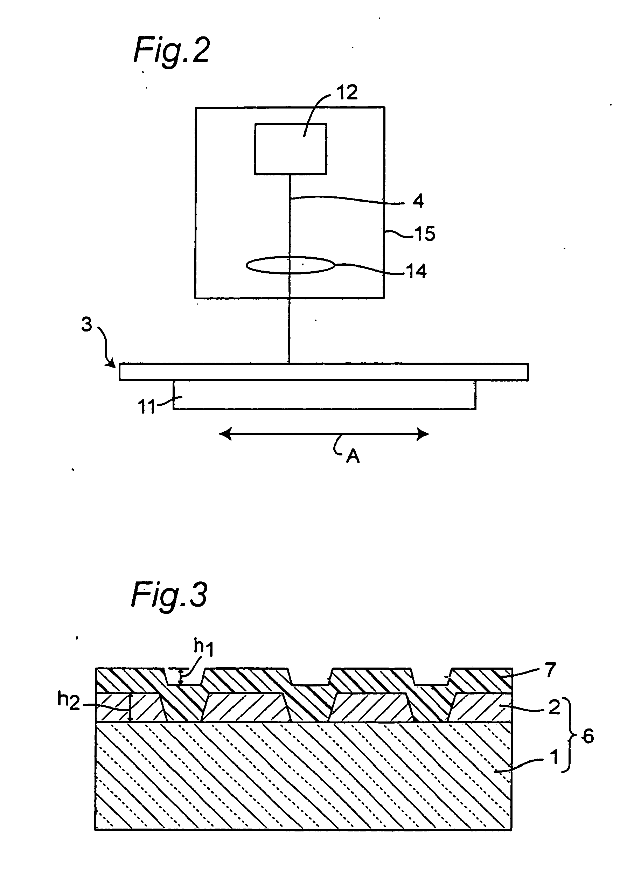

Next, a method for exposing the master substrate 3, that is, a method for recording a pattern on the master substrate 3 is described with reference to Fig. 2. As shown in Fig. 2, a master substrate 3 is placed on a turntable 11 and rotated with the turntable 11. A recording light 4 from a light source 12 is focused on a surface of the master substrate 3 by means of a lens 14. The recording light 4 may be modulated and/or deflected within the light source 12, if necessary. During recording, a recording head 15 moves relatively and parallel to the turntable 11 in the direction of the arrow "A". Thereby, the state-changed portions are formed sequentially in the form of spiral in the master substrate 3 so that the desired pattern is formed as the latent image 5. A laser beam or a bundle of electron beams may be used as the recording light 4.

In the master substrate 3 where the latent image 5 of the desired pattern is formed, the state-changed portion (for example, a phase-changed portion) formed by the temperature rising due to the exposure and the the state-unchanged portion have etching rates different from each other. In the development step (see Fig. 1B), the master substrate 3 is developed by an etching using this difference in etching rate. The etching includes, for example, a dry etching such as a reactive ion etching, and a wet etching with acid or alkali. However, a method for the etching is not limited thereto, and any method may be employed as long as the state-changed portion presents an etching rate different from that of the state-unchanged portion during the etching. The master 6 is obtained by this development step.

In the organic layer formation step of Embodiment 1 (see Fig. 1C), a spin coat method is employed. The spin method is an application method which includes: preparing a coating liquid by dissolving or dispersing an organic material (such as a resin) which is to constitute a coating film in an appropriate solvent; applying the coating liquid by dropping the liquid to a rotating object (that is, the master); and evaporating the solvent so as to form the coating film. This method makes it possible to obtain a thin organic layer efficiently. For example, a phenol resin such as a novolak resin, an acrylic resin such as PMMA, and a styrene resin such as a polystyrene and a styrene copolymer are suitable for being applied to the master 6 by the spin coat method. Alternatively, the organic layer may be formed by the spin coat method using a coating liquid wherein a photoresist whose main component is a phenol resin or an acrylic resin is dissolved or dispersed in a solvent. The solvent for preparing the coating liquid used for spin coating may be, for example, an organic solvent such as a ketone, an ester or a hydrocarbon.

The solvent in the coating liquid is evaporated by using an oven if necessary, to thereby an organic layer 7 which is to be disposed between the resist 2 and the conductive film 8. Before applying the coating liquid, it is preferable that the a coupling agent such as a silane coupling agent is deposited to the surface of the master 6 by vacuum deposition or spin coating, since the coating liquid can be applied uniformly.

A condition for a spin coating is selected based on the viscosity of the coating liquid, the concentration of the resin in the coating liquid and the degree of dilution of the coating liquid, since an optimal condition for the spin coating depends on these parameters. The operation condition for the spin coating is not limited to particular one, as long as the substantially uniform organic layer of a desired thickness is formed.

A material which constitutes the organic layer formed by the spin coat method is not limited to the above mentioned resins, as long as the organic layer 7 has a preferred thickness as described below. Other material may be used for forming the organic layer 7. However, in the case where the organic layer 7 needs to insulate the resist 2 from the conductive film 8, the organic layer 7 should be formed from an insulating material. It should be noted that most of organic materials are insulating materials.

The preferred thickness of the organic layer as described below is easily realized by using a novolak resin or PMMA which is employed as a base of an commercially available photoresist. When the photoresist is used for forming the organic layer, a thinner for a resist may be used as the solvent for preparing the coating liquid. The photoresist is also preferably used since a residue of the organic layer 7 is easily removed when the residue is remained on a surface of the stamper with the conductive film 10b. The organic layer 7 is preferably formed from a material which dissolves in a solvent that does not erode the metal layer, since there may be a requirement for removing the residue of the organic layer on the stamper 10b. The photoresist is, by nature, prepared so that it can be removed by any method. Therefore, even if the photoresist is remained as the residue on the stamper 10b, the residue can be easily removed using a conventional technique for removing the photoresist. As described herein, the photoresist is suitable for forming the organic layer in the production method of Embodiment 1.

A thickness of the organic layer 7 needs to be selected so that the following two requirements are satisfied:
(First requirement)Decomposition of the resist 2 and a chemical reaction of resist 2 with the conductive film 8 and the metal layer 9 are suppressed during the plating for forming the metal layer 9; and
(Second requirement)After the formation of the organic layer 7, a concavo-convex pattern with a desired shape and height is formed in the surface of the master 6.

In other words, when the thickness of the organic layer 7 is too small, many voids exist in the organic layer. This leads to insufficient separation between the resist 2 and the conductive film 8, resulting in partial contact and interaction of the resist and the conductive film. In order to avoid such inconvenience, the organic layer needs to have a sufficient thickness. On the other hand, the formation of the organic layer 7 causes flattening of the concavo-convex pattern formed in the surface of the layer 7 (that is, the formation of the layer 7 makes the height of the concavo-convex pattern smaller), since the organic layer 7 tends to be thicker within the concavity of the concavo-convex pattern formed in the surface of the master 6. Consequently, as the organic layer 7 is thicker, the degree of flattening of the concavo-convex pattern is larger. Therefore, the thickness of the organic layer 7 needs to be selected within a range of thickness which causes a low degree of flattening of the concavo-convex pattern in the master 6. Therefore, the following experiments were carried out in order to determine the range of thickness of the organic layer 7 which range satisfied the above requirements when the layer 7 was formed by the spin coat method.

Firstly, the procedure which was used for determining a range of thickness that satisfied the above the fist requirement is described. Herein, four combinations which were obtained by combining two types of organic layers 7 and two types of resists 2, were used as shown in Table 1. Two types of resists 2 each of which is made from a tellurium oxide having a low stability during the plating for forming the metal layer 9, were used. The resist A was formed from TeO_{1.5} and the resist B was formed from TeO_{1.0}. As the materials for the organic layer 7, a novolak resin and PMMA were employed. The organic layer 7 was formed by a spin coat method using a coating liquid which was prepared by dissolving the novolak resin or PMMA into a thinner for photoresist. For each combination, six types of laminates were produced, which included the organic layers 7 having thicknesses different from each other (that is, twenty four types of laminates were produced in total). The conductive film 8 (Ni, 50 nm thickness) and the metal layer 9 were formed on each laminate. Next, the conductive film 8 and the metal layer 9 were peeled off together from the master 6 to obtain a stamper with conductive film 8. Subsequently, the nondefective rate of plating was determined. The metal layer 9 was formed from Ni into 300 µm thickness by a plating. The nondefective rate of plating was represented by the number of nondefective stampers among ten stampers. Specifically, as to each laminate, ten stampers were formed by a plating, and the separation surface (that is, the bared surface of the conductive film 8) of each stamper was observed. The stamper whose separation surface had a defection with diameter (that is the length of the longest line of lines each of which connects two arbitrary points on a contour of the defection) longer than 100 µm was classified into a defective stamper, and the number of nondefective stampers was counted. It can be said that as the number of nondefective stampers is larger, the tolerance of the resist 2 to plating is more improved by the organic layer 7. The results are shown in Table 1.

**Table 1**

| Nondefective rate of plating (number of nondefective stampers among ten samples) | | | | | | | |
|---|---|---|---|---|---|---|---|
| Thickness of organic layer [nm] | | 0 | 3 | 5 | 10 | 15 | 20 |
| Organic layer: Novolak | Resist A | 0 | 1 | 5 | 9 | 10 | 10 |
| | Resist B | 4 | 4 | 8 | 9 | 10 | 10 |
| Organic layer: PMMA | Resist A | 0 | 1 | 4 | 8 | 10 | 10 |
| | Resist B | 4 | 5 | 9 | 9 | 10 | 10 |

As seen from Table 1, in any combination, the tolerance of the resist 2 to plating was improved surely by the organic layer 7 when the thickness of the layer 7 was 5 nm or larger, and the tolerance of the resist 2 to plating was particularly improved when the thickness of the layer 7 was 15 nm or larger.

Next, the procedure for determining a range of thickness that satisfies the above second requirement is described. The master 6 was produced by forming a pit sequence in the form of spiral as a concavo-convex pattern in the resist 2. The pit sequence had a width of 130 nm and a shortest pit length of around 100 nm, and the track pitch was 320 nm. As shown in Table 2, two types of masters 6 whose heights of the concavo-convex patterns were 35 nm and 90 nm respectively, were prepared. Six types of laminates were produced, which included the organic layers 7 having thicknesses different from each other (that is, twelve types of laminates were produced in total). The height of the concavo-convex pattern formed in the surface of the organic layer 7 was determined for each laminate. The results are shown in Table 2. The organic layer 7 was formed by a spin coat method using a coating liquid which was prepared by dissolving a novolak resin into a thinner for photoresist. The height of the concavo-convex pattern is a distance between a plane parallel to the principal surface of the master which plane passes the bottom of the concavity and a plane parallel to the principal surface of the master which plane passes the top of the convexity. The height of the concavo-convex pattern is schematically shown in Fig. 3. In Fig. 3, h₁ represents the height of the concavo-convex pattern in the organic layer 7 and h₂ represents the height of the concavo-convex pattern in the master 6.

**Table 2**

| The height of concavo-convex pattern in the surface of the organic layer | | | | | | |
|---|---|---|---|---|---|---|
| Thickness of organic layer [nm] | 5 | 10 | 20 | 40 | 60 | 80 |
| Height of concavo-convex pattern in master: 35 nm | 25 | 18 | 17 | 15 | 12 | 7 |
| Height of concavo-convex pattern in master: 90 nm | 53 | 49 | 47 | 41 | 36 | 29 |

As seen from Table 2, it was found that as the thickness of the organic layer 7 was larger, the height of the concavo-convex pattern was smaller and the degree of flattening of the concavo-convex pattern was higher. Further, when the thickness of the organic layer 7 was 80 nm or smaller, the concavo-convex pattern in the master 6 was reflected on the surface of the organic layer 7. However, when the thickness of the organic layer was 80 nm, the uniformity of the concavo-convex pattern on the surface of the layer 7 might be somewhat inferior. Therefore, the thickness of the organic layer 7 is preferably 60 nm or smaller. Further, in order to obtain a more uniform concavo-convex pattern, the thickness of the organic layer 7 is preferably in the range in which the height of concavo-convex pattern in the layer 7 is relatively constant independent of the thickness of the organic layer, that is, in a range of 10 nm to 40 nm.

From the above results, the thickness of the organic layer 7 is preferably in a range of 5 nm to 60 nm, and more preferably in a range of 15 nm to 40 nm, in the case where the layer 7 is formed by a spin coat method. Further, according to the results shown in Table 2, the height of the concavo-convex pattern in the surface of the organic layer 7 can be controlled at least in a range of 12 nm to 25 nm, or a range of 36 nm to 53 nm by selecting the height of the concavo-convex pattern in the master 6 properly.

Next, the steps carried out after forming the organic layer 7 are described. In the conductive film formation step (see Fig. 1D), the conductive film 8 of, for example, Ni or Au is formed by an electroless plating on the surface of the master 6 on which the organic layer 7 has been formed. Alternatively, the conductive film 8 may be formed by a sputtering method or a vacuum deposition method. The electroless plating gives lower adhesiveness between the conductive film 8 and the resist 2 compared with the sputtering or the vacuum deposition. Therefore, in the case where the stamper with conductive film 10b is produced in a manner as described below, the conductive film which is formed by the electroless plating suppresses the residue of the organic layer remaining on the stamper 10b. The thickness of the conductive film 8 is selected, for example, a range of 10 nm to 100 nm. This conductive film 8 is used as an electrode upon forming the metal layer 9 by a plating.

In the metal layer formation step (see Fig. 1E), the metal layer 9 is formed on the master 6 by a plating such as a Ni electroforming plating. The thickness of the metal layer 9 is selected, for example, from a range of 200 µm to 500 µm.

In the peeling step (see Fig. 1F), the metal layer 9 alone or the metal layer 9 together with the conductive film 8 is exfoliated from the master 6. Subsequently, shape-adjustment process is carried out by polishing the backside (that is, the surface opposite to the separation surface) or punching (or cutting) the metal layer, and thereby the stamper 10a or 10b is completed. When the metal layer 9 is exfoliated together with the conductive film 8 from the master 6, the residue of the organic layer 7 may be left on the surface of the conductive film 8 which surface is bared by the exfoliation. When the residue causes problems, the residue of the layer 7 may be removed by dissolving the residue with a solvent which does not erode the conductive film 8 and the metal layer 9. Alternatively, the organic material may be selectively removed by a plasma etching. For example, when the organic layer 7 is formed from a novolak resin or an acrylic resin, the residue may be removed using an organic solvent such as 2-heptanone or a strongly alkaline aqueous solution. Also other organic materials can be removed by a solvent which does not erode the conductive film 8 and the metal layer 9. Such a solvent is, for example, an organic solvent such as a ketone and an ester, and a strongly alkaline aqueous solution.

As describe above, Embodiment 1 of the present invention makes it possible to employ an inorganic material as the resist which material has made it difficult or impossible to form the metal layer by a plating. Thereby, it becomes possible to produce the master utilizing, for example, the characteristic that the inorganic material changes its property at or over a certain temperature. In Embodiment 1, the organic layer is formed by a spin coat method. The spin coat method is advantageous in that the organic material can be selected from a wider range compared with the vacuum deposition method which is employed in Embodiment 2 or 3, and it makes it possible to form a stamper whose height of a concavo-convex pattern is relatively low.

### (Embodiment 2)

As Embodiment 2, a method for producing a stamper which includes forming an organic layer on a surface of a master by a vacuum deposition method is described. The production method of Embodiment 2 is the same as the production method of Embodiment 1 except for a method for forming the organic layer. Therefore, for simplicity, Embodiment 2 is described in the following by clarifying difference between Embodiment 2 and Embodiment 1, with reference to Figs. 1A to 1F.

In Embodiment 2, the exposure step and the development step are similar to those in Embodiment 1. Therefore, in this embodiment, the same master 6 as that fabricated in Embodiment 1 is produced.

In the organic layer formation step (see Fig. 1C), an organic layer 7 is formed on the master 6 by a vacuum deposition method. The vacuum deposition method makes it possible to form a concavo-convex pattern which reflects the concavo-convex pattern in the master 6 more exactly in the surface of the organic layer 7, compared with the spin coat method. In other words, the vacuum deposition enables a lower degree of flattening of the concavo-convex pattern. An organic material suitable for forming the organic layer 7 by the vacuum deposition method may be, for example, a phenol resin, an acrylic resin, a styrene resin, a polyamide, a polyimide, a polyurea, or a polyurethane. As described above, a novolak resin and PMMA are preferably used since they can be very easily removed using a technique for removing a photoresist when the organic layer is remained on the stamper as residue.

A condition for a vacuum deposition is not limited to particular one as long as the substantially uniform organic layer 7 of a preferred thickness as described below is formed within the surface of the master 6. A resistance heating method is preferred rather than an electron beam irradiation method as a method for evaporating the organic material for avoiding the destruction of the organic material.

A material which constitutes the organic layer formed by the vacuum deposition method is not limited to the above mentioned resins, as long as the organic layer 7 has a preferred thickness as described below. Other material may be used for forming the organic layer 7. However, in the case where the organic layer 7 needs to insulate the resist 2 from the conductive film 8, the organic layer 7 should be formed from an insulating material. It should be noted that most of organic materials are insulating materials.

Also when the organic layer 7 is formed by the vacuum deposition method, the thickness of the organic layer 7 needs to be selected so that the two requirements which are described in connection with Embodiment 1 are satisfied. Therefore, the following experiments were carried out in order to determine the range of thickness of the organic layer 7 which range satisfied the above requirements, when the layer 7 was formed by the vacuum deposition method.

Firstly, the procedure which was used for determining a range of thickness that satisfied the above the first requirement is described. As shown in Table 3, two types of masters whose resist 2 were made from materials different from each other, were prepared. For each master, six types of laminates were produced, which included the organic layers 7 having thicknesses different from each other (that is, twelve types of laminates were produced in total). The conductive film 8 and the metal layer 9 were formed on each laminate. Next, the conductive film 8 and the metal layer 9 were peeled off together from the master 6 to obtain a stamper with conductive film 8, and then the nondefective rate of plating was determined. The resists A and B which were the same as those used in Embodiment 1 were employed as the resist 2. PMMA was evaporated and deposited on the surface of the master 6 to form the organic layer 7. The methods for forming the conductive film 8 and the metal layer 9 and the method for determining the nondefective rate of plating were as described in connection with Embodiment 1. The results are shown in Table 3. As seen from Table 3, the tolerance of any resist 2 to plating was improved surely by the organic layer 7 when the thickness of the layer 7 was 5 nm or larger, and the tolerance of the resist 2 to plating was particularly improved when the thickness of the layer 7 was 15 nm or larger.

**Table 3**

| Nondefective rate of plating (number of nondefective stampers among ten samples) | | | | | | | |
|---|---|---|---|---|---|---|---|
| Thickness of organic layer [nm] | | 0 | 3 | 5 | 10 | 15 | 20 |
| Organic layer: PMMA | Resist A | 0 | 1 | 6 | 8 | 10 | 10 |
| | Resist B | 4 | 6 | 8 | 8 | 10 | 10 |

Next, the range of thickness which satisfied the second requirement was determined. Two types of masters 6 whose heights of the concavo-convex patterns were 35 nm and 90 nm respectively, were prepared in the same manner as in Embodiment 1. Six types of laminates were produced, which included the organic layers 7 having thicknesses different from each other (that is, twelve types of laminates were produced in total). The height of the concavo-convex pattern formed in the organic layer 7 was determined for each laminate. The results are shown in Table 4. PMMA was used for forming the organic layer 7.

**Table 4**

| The height of concavo-convex pattern in the surface of the organic layer | | | | | | |
|---|---|---|---|---|---|---|
| Thickness of organic layer [nm] | 5 | 10 | 20 | 40 | 60 | 80 |
| Height of concave-convex pattern in master: 35 nm | 35 | 33 | 29 | 25 | 22 | 16 |
| Height of concavo-convex pattern in master: 90 nm | 82 | 71 | 68 | 63 | 58 | 41 |

As seen from Table 4, it was found that as the thickness of the organic layer 7 was larger, the height of the concavo-convex pattern was smaller and the degree of flattening of the concavo-convex pattern was higher. Further, when the thickness of the organic layer 7 was 80 nm or smaller, the concavo-convex pattern in the master 6 was reflected on the surface of the organic layer 7 and the degree of flattening of the concavo-convex pattern was lower than that obtained in Embodiment 1. However, when the thickness of the organic layer was 80 nm, the uniformity of the concavo-convex pattern on the surface of the layer 7 might be somewhat inferior. Therefore, the thickness of the organic layer 7 is preferably 60 nm or smaller. Furthermore, when the thickness of the organic layer 7 was 60 nm or smaller, the height of concavo-convex pattern did not depend largely on the thickness of the organic layer 7, and it had a satisfactory level.

From the above results, the thickness of the organic layer 7 is preferably in a range of 5 nm to 60 nm, and more preferably in a range of 15 nm to 60 nm, in the case where the layer 7 is formed by a vacuum deposition method. Further, according to the results shown in Table 4, the height of the concavo-convex pattern in the surface of the organic layer 7 can be controlled at least in a range of 22 nm to 35 nm, or a range of 58 nm to 82 nm by selecting the height of the concavo-convex pattern in the master 6.

After forming the organic layer, the conductive film formation step, the metal layer formation step and the peeling step are carried out in the same manner as in Embodiment 1. The stamper 10a or 10b is completed through these steps.

As described above, Embodiment 2 of the present invention makes it possible to employ an inorganic material as the resist which material has made it difficult or impossible to form the metal layer by a plating. Thereby, it becomes possible to produce the master utilizing, for example, the characteristic that the inorganic material changes its property at or over a certain temperature. Further, the organic layer formed by the vacuum deposition method makes it possible to produce a stamper having a height of concavo-convex pattern higher than that of the stamper produced according to Embodiment 1 which employs the spin coat method.

### (Embodiment 3)

As Embodiment 3, a method for producing a stamper which includes forming an organic layer on a surface of a master by a vapor deposition polymerization method is described. The production method of Embodiment 3 is the same as the production methods of Embodiments 1 and 2 except for a method for forming the organic layer. Therefore, for simplicity, Embodiment 3 is described in the following by clarifying the difference between Embodiment 3 and Embodiments 1 and 2, with reference to Figs. 1A to 1F.

In Embodiment 3, the exposure step and the development step are similar to those in Embodiments 1 and 2. Therefore, in this embodiment, the same master 6 as that fabricated in Embodiment 1 is produced.

In the organic layer formation step (see Fig. 1C), an organic layer 7 is formed on the master 6 by a vapor deposition polymerization method. The "vapor deposition polymerization method", which is one of the vacuum deposition methods, means depositing one or more kinds of monomers on an object while polymerizing the monomers. In the case where two or more kinds of monomers are subjected to codeposition, a layer of copolymer is formed. The vapor deposition polymerization method makes it possible to form an excellent polymer thin film which has been difficult to be formed by the conventional vacuum deposition. Therefore, the vapor deposition polymerization method makes it possible to form a concavo-convex pattern which reflects the concavo-convex pattern in the master 6 more exactly in the surface of the organic layer 7, compared with the conventional vacuum deposition method employed in Embodiment 2. Further, since the organic layer formed by the vapor deposition polymerization method becomes denser than that formed by the spin coat method or the vacuum deposition method, the vapor deposition polymerization method enables the organic layer 7 to be formed into a thinner film. Organic materials used for the vapor deposition polymerization method are, for examples monomers which are polymerized to give a polyurea, a polyimide or a polyurethane.

A condition for a vapor deposition polymerization is not limited to particular one as long as the substantially uniform organic layer 7 of a preferred thickness as described below is formed within the surface of the master 6. The material which is deposited and polymerized is not limited to the above mentioned materials, as long as the organic layer 7 has a preferred thickness as described below. Other polymer may be formed using other monomers. However, in the case where the organic layer 7 needs to insulate the resist 2 from the conductive film 8, the organic layer 7 should be formed from an insulating material. It should be noted that most of organic materials are insulating materials. Since a technique for forming a thin film containing the polyurea, the polyimide, or the polyurethane by the vapor deposition polymerization has been widely studied and practically used, a layer containing such polymer is preferably formed in Embodiment 3. In Embodiment 3, the polyurea layer is particularly suitable for being formed by the vapor deposition polymerization. This is because the polyurea is easily formed into a thin film because of a low deposition rate and because the vapor deposition polymerization with a low aggression to the resist 2 can be carried out since the polyurea can be obtained by polymerization at a room temperature.

Also when the organic layer 7 is formed by the vapor deposition polymerization method, the thickness of the organic layer 7 needs to be selected so that the two requirements which are described in connection with Embodiment 1 are satisfied. Therefore, the following experiments were carried out in order to determine the range of thickness of the organic layer 7 which range satisfied the above requirements, when the layer 7 was formed by the vapor deposition polymerization method.

Firstly, the procedure which was used for determining a range of thickness that satisfied the above the fist requirement is described. As shown in Table 5, two types of masters whose resist 2 were made from materials different from each other, were prepared. For each master, six types of laminates were produced, which included the organic layers 7 having thicknesses different from each other (that is, twelve types of laminates were produced in total). The conductive film 8 and the metal layer 9 were formed on each laminate. Next, the conductive film 8 and the metal layer 9 were peeled off together from the master 6 to obtain a stamper with conductive film 8, and then the nondefective rate of plating was determined. The resists A and B which were the same as those used in Embodiment 1 were employed as the resist 2. Hexamethylene diisocyanate and tetramethylenediamine were co-evaporated, polymerized and deposited on the surface of the master 6 to form a polyurea layer as the organic layer 7. The methods for forming the conductive film 8 and the metal layer 9 and the method for determining the nondefective rate of plating were as described in connection with Embodiment 1. The results are shown in Table 5. As seen from Table 5, the tolerance of any resist 2 to plating is improved surely by the organic layer 7 when the thickness of the layer 7 is 3 nm or larger, and the tolerance of the resist 2 to plating is particularly improved when the thickness of the layer 7 is 10 nm or larger.

**Table 5**

| Nondefective rate of plating (number of nondefective stampers among ten samples) | | | | | | | |
|---|---|---|---|---|---|---|---|
| Thickness of organic layer [nm] | | 0 | 3 | 5 | 10 | 15 | 20 |
| Organic layer: Polyurea | Resist A | 0 | 4 | 8 | 10 | 10 | 10 |
| | Resist B | 4 | 8 | 9 | 10 | 10 | 10 |

Next, the range of thickness which satisfied the second requirement was determined. Two types of masters 6 whose heights of the concavo-convex patterns were 35 nm and 90 nm respectively, were prepared in the same manner as in Embodiment 1. Seven types of laminates were produced, which included the organic layers 7 having thicknesses different from each other (that is, fourteen types of laminates were produced in total). The height of the concavo-convex pattern formed in the organic layer 7 was determined for each laminate. The results are shown in Table 6. The organic layer 7 of polyurea was formed by the vapor deposition polymerization method in the same manner as in the experiment for determining the thickness range satisfying the fist requirement.

**Table 6**

| The height of concavo-convex pattern in the surface of the organic layer | | | | | | | |
|---|---|---|---|---|---|---|---|
| Thickness of organic layer [nm] | 5 | 10 | 20 | 40 | 60 | 80 | 100 |
| Height of concavo-convex pattern in master: 35 nm | 34 | 34 | 33 | 31 | 30 | 29 | 27 |
| Height of concavo-convex pattern in master: 90 nm | 85 | 83 | 84 | 79 | 72 | 64 | 65 |

As seen from Table 6, it was found that as the thickness of the organic layer 7 was larger, the height of the concavo-convex pattern was smaller and the degree of flattening of the concavo-convex pattern was higher, but the degree was much smaller than that in the stampers produced according to Embodiments 1 and 2. Specifically, when the thickness of the organic layer 7 was 100 nm or smaller, the concavo-convex pattern in the master 6 was reflected on the surface of the organic layer 7 and a satisfactory level of uniformity was achieved. Further, when the thickness of the organic layer 7 was 100 nm or smaller, the height of the concavo-convex pattern did not depend largely on the thickness of the organic layer 7, and it had a satisfactory level. Furthermore, from the visual observation, it was found that not only the height of the concavo-convex pattern in the master 6, but also the shape of the pattern was reflected more exactly in the organic layer 7 formed by the vapor deposition polymerization method.

From the above results, the thickness of the organic layer 7 is preferably in a range of 3 nm to 100 nm, and more preferably in a range of 10 nm to 100 nm, in the case where the layer 7 is formed by a vapor deposition polymerization method. Further, according to the results shown in Table 6, the height of the concavo-convex pattern in the surface of the organic layer 7 can be controlled at least in a range of 27 nm to 34 nm, or a range of 65 nm to 85 nm by selecting the height of the concavo-convex pattern in the master 6.

After forming the organic layer, the conductive film formation step, the metal layer formation step and the peeling step are carried out in the same manner as in Embodiment 1. The stamper 10a or 10b is completed through these steps. The organic film formed by the vapor deposition polymerization is generally difficult to dissolve in a solvent. In the case where the residue of the organic layer 7 causes problems in the stamper with the conductive film 10b, the residue may be removed by a plasma etching or may be removed by a treatment with a solvent after the polymer has been depolymerized by a thermal treatment under vacuum. Further, as described above, no or less residue of the organic layer 7 may be remained on the stamper by forming the conductive film 8 by an electroless plating.

As described above, Embodiment 3 of the present invention makes it possible to employ an inorganic material as the resist which material has made it difficult or impossible to form the metal layer by a plating. Thereby, it becomes possible to produce the master utilizing, for example, the characteristic that the inorganic material changes its property at or over a certain temperature. Further, the organic layer formed by the vapor deposition polymerization method makes it possible to produce a stamper having a height of the concavo-convex pattern higher than that of the stampers produced according to Embodiments 1 and 2.

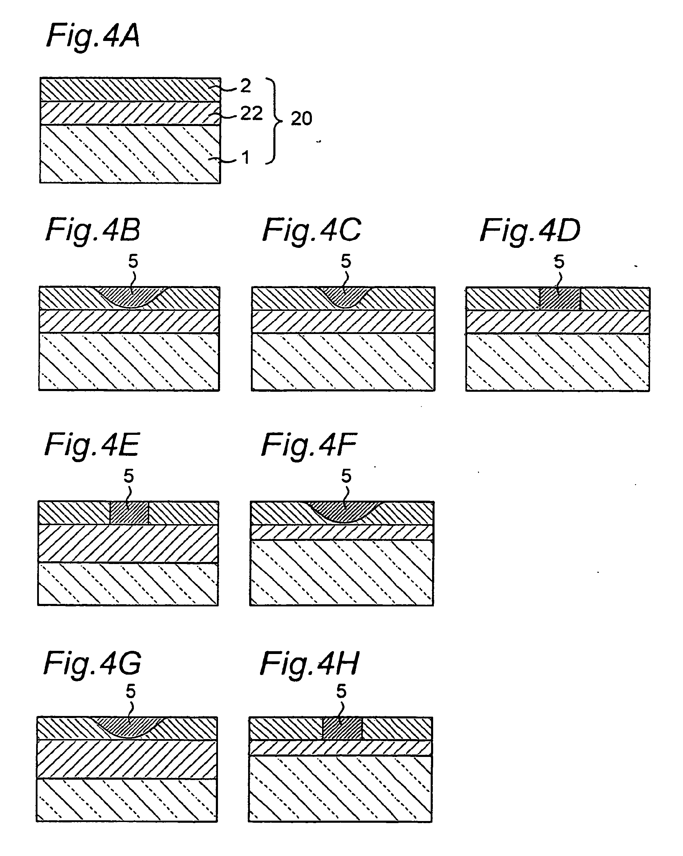

The method of the present invention may be carried out using a master substrate other than that shown in Fig. 1A. For example, as shown in Fig. 4A, a master substrate 20 including a recording-auxiliary layer 22 whose material is different from the material of the resist 2 is disposed between the resist 2 and the substrate 1. The recording-auxiliary layer serves to control a shape of a cross section in the thickness direction (which may be merely referred to as a "cross-sectional shape") of the latent image formed in the resist 2 in the case where the resist 2 is formed from an inorganic material whose state is changed by a temperature rising due to the exposure. The cross-sectional shape of the latent image is controlled by selecting a thermal conductivity of the material of the recording-auxiliary layer and a thickness of the recording-auxiliary layer. Specific methods for controlling the cross-sectional shape of the latent image are described in the following with reference to the drawings.

Figs. 4B to 4D show how cross-sectional shape of the state-changed portions (that is, latent image 5) in the resist 2 is effected by thermal conductivity of materials of the recording-auxiliary layers 22, when the thickness of the recording-auxiliary layer 22 is constant. The recording-auxiliary layer 22 shown in Fig. 4B consists of a material having the highest thermal conductivity, and the layer 22 shown in Fig. 4D consists of a material having the lowest thermal conductivity (that is, the thermal conductivity of the layers 22 is Fig. 4B > Fig. 4C > Fig. 4D). From Figs. 4B to 4D, it is understood that the cross-sectional shape of the latent image 5 is changed depending on the thermal conductivity of the material of the recording-auxiliary layer 22. In the case where only the thermal conductivity of the material of the recording-auxiliary layer is changed in the master substrate having the recording-auxiliary layer between the resist and the substrate, the smaller the thermal conductivity is, the smaller the heat which is released from the substrate-side surface of the resist is. In other words, as the thermal conductivity of the recording-auxiliary layer is smaller, the temperature rising occurs at a deeper position, which results in a steeper boundary between the state-changed portion 5 and the state-unchanged portion as shown in Fig. 4D.

Figs. 4E and 4F schematically show how the cross-sectional shape of the latent image 5 in the resist 2 is changed depending on the thickness of the recording-auxiliary layer 22 when the recording-auxiliary layer 22 is formed from a material whose thermal conductivity is lower than that of a material of the substrate 1. In the master substrate shown in Fig. 4E, the heat release from the resist 2 is more suppressed since the recording-auxiliary layer 22 is thicker, which results in a higher inclination of boundary between the state-changed portion and the state-unchanged portion. Figs. 4G and 4H schematically show how the cross-sectional shape of the latent image 5 is changed depending on the thickness of the recording-auxiliary layer 22 when the recording-auxiliary layer 22 is formed from a material whose thermal conductivity is higher than that of a material of the substrate 1. Compared with a master substrate having no recording-auxiliary layer, in the master substrate having the recording-auxiliary layer 22 whose thermal conductivity is higher than that of the substrate 1, the inclination of boundary between the state-changed portion and the state-unchanged portion becomes more gentle. Further, the thicker the recording-auxiliary layer 22 is, the gentler the inclination of the boundary is. It should be noted that Figs. 4B to 4H are the schematic views illustrating how the thermal conductivity and the thickness of the recording-auxiliary layer effect the cross-sectional shape of the latent image in the resist. The cross-sectional shape which is actually obtained depends on a specific thermal conductivity of the material for the substrate, the difference in thermal conductivity between the material for the substrate and the material for the recording-auxiliary layer, and the actual thickness of the recording-auxiliary layer.

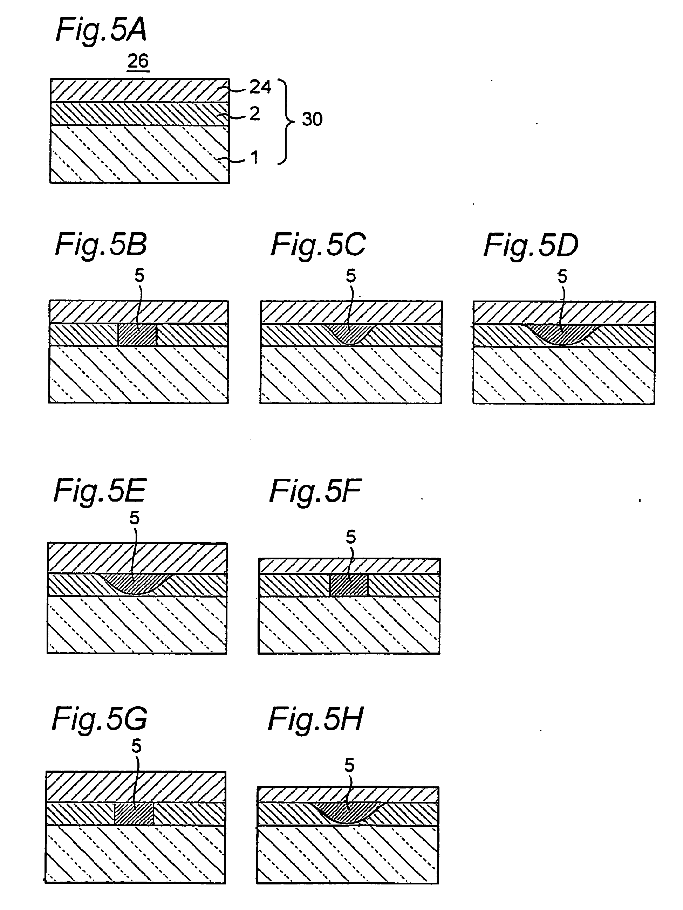

Alternatively, in the method of the present invention, as shown in Fig. 5A, a master substrate 30 having a recording-auxiliary layer 24 formed on the surface of the resist 2 may be employed. By employing the master substrate of this constitution, the cross-sectional shape of the latent image can be controlled. In the case where the master substrate of this constitution is employed, the recording-auxiliary layer 24 is removed after the latent image has been formed. In Fig. 5A, the numeral 26 refers to a surrounding medium (that is, an atmosphere upon exposure), which is generally air.

Figs. 5B to 5D show how cross-sectional shape of the latent image 5 in the resist 2 is effected by the thermal conductivity of the material of the recording-auxiliary layer 24, when the thickness of the layer 24 is constant. The recording auxiliary layer 24 shown in Fig. 5B consists of a material having the highest thermal conductivity, and the recording-auxiliary layer 24 shown in Fig. 5D consists of a material having the lowest thermal conductivity (that is, the thermal conductivity of the layers 24 is Fig. 5B > Fig. 5C > Fig. 5D). From Figs. 5B to 5D, it is understood that the cross-sectional shape of the latent image 5 is changed depending on the thermal conductivity of the material of the recording-auxiliary layer 24. In the case where only the thermal conductivity of the material of the recording-auxiliary layer is changed in the master substrate having the recording-auxiliary layer disposed above the resist, as the thermal conductivity is smaller, the heat tends to accumulate around the surface of the resist. In other words, as the thermal conductivity of the recording-auxiliary layer is smaller, the temperature rising is difficult to occur at a deeper position, which results in a gentler slope of boundary between the state-changed portion and the state-unchanged portion as shown in Fig. 5D.

Figs. 5E and 5F schematically show how the cross-sectional shape of the latent image 5 in the resist 2 is changed depending on the thickness of the recording-auxiliary layer 24 when the recording-auxiliary layer 24 is formed from a material whose thermal conductivity is lower than that of the surrounding medium 26. In the master substrate shown in Fig. 5E, the heat release from the resist 2 is more suppressed, since the recording-auxiliary layer 24 is thicker, which results in a lower (gentler) inclination of boundary between the state-changed portion and the state-unchanged portion.

Figs. 5G and 5H schematically show how the cross-sectional shape of the latent image 5 is changed depending on the thickness of the recording-auxiliary layer 24 when the recording-auxiliary layer 24 is formed from a material whose thermal conductivity is higher than that of the surrounding medium 26. Compared with a master substrate having no recording-auxiliary layer, in the master substrate having the recording-auxiliary layer 24 whose thermal conductivity is higher than that of the surrounding medium 26, the inclination of boundary between the state-changed portion and the state-unchanged portion becomes steeper. Further, the thicker the recording-auxiliary layer 24 is, the steeper the inclination of the boundary is.

The surrounding medium 26 is generally air whose thermal conductivity is much lower than that of solid or liquid. In that case, it is difficult to make the thermal conductivity of the recording-auxiliary layer 24 smaller than that of the surrounding medium, and therefore the control of the cross-sectional shape of the latent image can be realized as shown in Figs. 5G and 5H. However, when a liquid is used as the surrounding medium 26 during the recording according to, for example, a LIL (liquid immersion lens) method, the shape control of the latent image 5 can be realized as shown in any of Figs. 5E to 5H. As shown in Figs. 5B to 5H, also when the recording-auxiliary layer is formed above the resist, the distribution of the state-changed portion 5 which is formed by the temperature rising upon recording can be changed by varying the thickness of the recording-auxiliary layer 24. It should be noted that Figs. 5B to 5H are the schematic views illustrating how the thermal conductivity and the thickness of the recording-auxiliary layer effect the cross-sectional shape of the latent image in the resist. The cross-sectional shape which is actually obtained depends on a specific thermal conductivity of the surrounding medium, the difference in thermal conductivity between the surrounding medium and the material for the recording-auxiliary layer, and the actual thickness of the recording-auxiliary layer.

Alternatively, in the method of the present invention, a master substrate 40 including two recording auxiliary layers 22 and 24 disposed on both sides of the resist 2 may be used. Also the master substrate of this constitution makes it possible to control the cross-sectional shape of the latent image. In the case where the master substrate of this constitution is employed, the recording-auxiliary layer 24 is removed after the latent image has been removed.

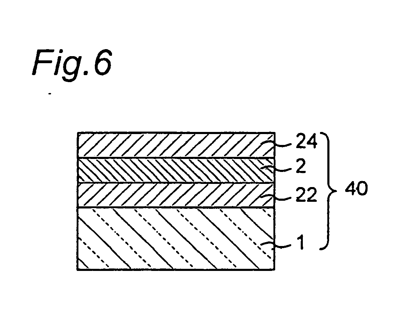

In the master substrates as shown in Figs. 4 to 6, the recording auxiliary layers 22 and 24 may be formed from at least one material which is selected from the group consisting of a selenide such as ZnSe, an oxide such as Si-O, Ge-O, Al-O, Zn-O, Y-O, La-O, Ti-O, Zr-O, Hf-O, Nb-O, Ta-O, Cr-O, Mo-O, W-O, Sn-O, In-O, Sb-O, and Bi-O, a nitride such as Si-N, Ge-N, Al-N, Zn-N, Ti-N, Zr-N, Hf-N, Nb-N, TaN, Cr-N, Mo-N, W-N, Sn-N and In-N, a nitride oxide such as Si-O-N, Ge-O-N, Al-O-N, Ti-O-N, Zr-O-N, Hf-O-N, Nb-O-N, Ta-O-N, Cr-O-N, Mo-O-N, W-O-N, Sn-O-N and In-O-N, a carbide such as Ge-C, Cr-C, Si-C, Al-C, Ti-C, Zr-C and Ta-C, a fluoride such as Si-F, Al-F, Mg-F, Ca-F and LaF, and ZnS and SiO₂, and mixtures thereof, by a sputtering method or a vapor deposition method. Alternatively, the recording-auxiliary layer may be formed from an organic material such as an acrylic resin, an epoxy resin or a mixture thereof. The recording-auxiliary layer formed from a resin material may be formed by, for example a spin coat method. Further, in the constitution shown in Figs. 5 and 6, the recording-auxiliary layer above the resist may be a liquid. Specifically, the latent image can be controlled by carrying out the exposure under a condition that the liquid which is to be the recording-auxiliary layer is placed on (for, example, applied to) the resist or under a condition that the master substrate is immersed in the liquid.

Further, in the master substrates as shown in Figs. 4 to 6, the recording-auxiliary layers 22 and 24 may serves to increase an absorbance of the resist at the wavelength of light which is used for the exposure. Specifically, the absorbance of the resist may be increased by selecting the optical constant of a material and a thickness of the recording-auxiliary layer in consideration of the optical effect (for example, reflection and interference) given by the substrate, the recording-auxiliary layer and the resist.

Although the present invention is described in its preferred embodiments, the present invention is not limited thereto. It should be understood that any modification and changes may be made in the present invention without departing from the scope defined by the appended claims.

.The stamper production method of the present invention makes it possible to form a metal layer by plating a master including a resist of an inorganic material. The resist of the inorganic material is suitable for forming a fine concavo-convex pattern in the master since the inorganic material has a characteristic of, for example, changing its phase by a temperature rising due to an exposure. Therefore, a stamper produced according to the method is suitable for producing an optical information recording medium which requires a fine concavo-convex pattern so that signal is recorded on and/or reproduced from the optical information recording medium using a laser beam having a short wavelength such as a blue laser beam.

## Claims

1. A method for producing a stamper (10a, 10b) with a concavo-convex pattern for an optical information recording medium comprising:
producing a master (6) having a concavo-convex pattern by exposing and developing a master substrate (3, 20, 30, 40) which comprises a substrate (1) and a resist (2) containing an inorganic material;
forming a conductive film (8);
forming a metal layer (9) on the conductive film (8); and
peeling off the metal layer (9) alone or the metal layer (9) together with the conductive (8) film from the master (1)
**characterized by** the step of
forming an organic layer (7) on the concavo-convex pattern of the master (3), wherein the conductive film (8) is formed on the organic layer (7).

2. The method according to claim 1, wherein the inorganic material is a thermosensitive material whose state is changed by a temperature change due to the exposure.

3. The method according to claim 1 or 2, wherein the metal layer (9) is formed by a plating.

4. The method according to any one of claims 1 to 3, wherein the organic layer (7) is formed by a spin coat method.

5. The method according to claim 4, wherein the organic layer (7) comprises a phenol resin, an acrylic resin, or a styrene resin.

6. The method according to claim 5, wherein the organic layer (7) comprises a photoresist whose main component is the phenol resin or the acrylic resin.

7. The method according to claim 5, wherein a thickness of the organic layer (7) is in a range of 5 nm to 60 nm.

8. The method according to claim 6, wherein a thickness of the organic layer (7) is in a range of 5 nm to 60 nm.

9. The method according to claim 7, wherein the thickness of the organic layer (7) is in a range of 15 nm to 40 nm.

10. The method according to claim 8, wherein the thickness of the organic layer (7) is in a range of 15 nm to 40 nm.

11. The method according to any one of claims 1 to 3, wherein the organic layer (7) is formed by a vacuum process.

12. The method according to claim 11, wherein a vacuum deposition method is used as the vacuum process.

13. The method according to claim 12, wherein the organic layer (7) comprises a phenol resin, an acrylic resin, a styrene resin, a polyamide resin, a polyimide resin, a polyurea, or a polyurethane.

14. The method according to claim 13, wherein a thickness of the organic layer (7) is in a range of 5 nm to 60 nm.

15. The method according to claim 14, wherein the thickness of the organic layer (7) is in a range of 15 nm to 60 nm.

16. The method according to claim 12, wherein a vapor deposition polymerization method is used as the vacuum deposition method.

17. The method according to claim 16, wherein the organic layer (7) comprises a polyimide, a polyurea, or a polyurethane.

18. The method according to claim 17, wherein a thickness of the organic layer (7) is in a range of 3 nm to 100 nm.

19. The method according to claim 18, wherein the thickness of the organic layer (7) is in a range of 10 nm to 100 nm.

20. The method according to any one of claims 1 to 19, wherein the inorganic material of the resist (2) comprises at least one material selected from the group consisting of elements such as Ge, Te, Sb, Se and Mo and mixtures thereof, and compounds of these elements and mixtures thereof.

21. The method according to claim 20, wherein the inorganic material of the resist (2) further comprises at least material selected from the group consisting of Au, Pt, Cu, Ag, Pd, and Si.

22. The method according to any one of claims 1 to 21, wherein a height of the concavo-convex pattern of the stamper (10a, 10b) is in a range of 12 nm to 85 nm.

23. The method according to any one of claims 1 to 22, wherein the conductive film (8) is formed by an electroless plating.

## Patentansprüche

1. Verfahren zum Herstellen einer Matrize (10a, 10b) mit einem konkav-konvexen Muster für ein optisches Informationsaufzeichnungsmedium mit:
Herstellen eines Masters (6) mit einem konkav-konvexen Muster durch Belichten und Entwickeln eines Master-Substrats (3, 20, 30, 40), das ein Substrat (1) und ein Resist (2) mit einem anorganischen Material umfasst,
Bilden eines leitfähigen Films (8),
Bilden einer Metallschicht (9) auf dem leitfähigen Film (8), und
Abziehen der Metallschicht (9) allein oder der Metallschicht (9) zusammen mit dem leitfähigen Film (8) von dem Master (1),
**gekennzeichnet durch** den Schritt des
Bildens einer organischen Schicht (7) auf dem konkav-konvexen Muster des Masters (3), wobei der leitfähige Film (8) auf der organischen Schicht (7) gebildet wird.

2. Verfahren nach Anspruch 1,
wobei das anorganische Material ein thermosensitives Material ist, dessen Zustand durch eine Temperaturänderung infolge der Belichtung geändert wird.

3. Verfahren nach Anspruch 1 oder 2,
wobei die Metallschicht (9) durch ein Plattieren gebildet wird.

4. Verfahren nach einem der Ansprüche 1 bis 3,
wobei die organische Schicht (7) durch ein Spin-Coat-Verfahren gebildet wird.

5. Verfahren nach Anspruch 4,
wobei die organische Schicht (7) ein Phenolharz, ein Acrylharz oder ein Styrenharz aufweist.

6. Verfahren nach Anspruch 5,
wobei die organische Schicht (7) ein Photoresist aufweist, dessen Hauptbestandteil das Phenolharz oder das Acrylharz ist.

7. Verfahren nach Anspruch 5,
wobei eine Dicke der organischen Schicht (7) in einem Bereich von 5 nm bis 60 nm liegt.

8. Verfahren nach Anspruch 6,
wobei eine Dicke der organischen Schicht (7) in einem Bereich von 5 nm bis 60 nm liegt.

9. Verfahren nach Anspruch 7,
wobei die Dicke der organischen Schicht (7) in einem Bereich von 15 nm bis 40 nm liegt.

10. Verfahren nach Anspruch 8,
wobei die Dicke der organischen Schicht (7) in einem Bereich von 15 nm bis 40 nm liegt.

11. Verfahren nach einem der Ansprüche 1 bis 3,
wobei die organische Schicht (7) durch einen Vakuumprozess gebildet wird.

12. Verfahren nach Anspruch 11,
wobei ein Vakuumabscheideverfahren als der Vakuumprozess verwendet wird.

13. Verfahren nach Anspruch 12,
wobei die organische Schicht (7) ein Phenolharz, ein Acrylharz, ein Styrenharz, ein Polyamidharz, ein Polyimidharz, einen Polyharnstoff oder ein Polyurethan umfasst.

14. Verfahren nach Anspruch 13,
wobei eine Dicke der organischen Schicht (7) in einem Bereich von 5 nm bis 60 nm liegt.

15. Verfahren nach Anspruch 14,
wobei die Dicke der organischen Schicht (7) in einem Bereich von 15 nm bis 60 nm liegt.

16. Verfahren nach Anspruch 12,
wobei ein Dampfabscheidepolymerisationsverfahren als das Vakuumabscheideverfahren verwendet wird.

17. Verfahren nach Anspruch 16,
wobei die organische Schicht (7) ein Polyemid, einen Polyharnstoff oder ein Polyurethan aufweist.

18. Verfahren nach Anspruch 17,
wobei eine Dicke der organischen Schicht (7) in einem Bereich von 3 nm bis 100 nm liegt.

19. Verfahren nach Anspruch 18,
wobei die Dicke der organischen Schicht (7) in einem Bereich von 10 nm bis 100 nm liegt.

20. Verfahren nach einem der Ansprüche 1 bis 19,
wobei das anorganische Material des Resists (2) wenigstens ein Material aufweist, das ausgewählt ist aus der Gruppe bestehend aus Elementen wie Ge, Te, Sb, Se und Mo und Mischungen davon und Legierungen dieser Elemente und Mischungen davon.

21. Verfahren nach Anspruch 20,
wobei das anorganische Material des Reists (2) ferner wenigstens ein Material aufweist, das ausgewählt ist aus der Gruppe bestehend aus Au, Pt, Cu, Ag, Pd und Si.

22. Verfahren nach einem der Ansprüche 1 bis 21,
wobei eine Höhe des konkav-konvexen Musters der Matrize (10a, 10b) in einem Bereich von 12 nm bis 85 nm liegt.

23. Verfahren nach einem der Ansprüche 1 bis 22,
wobei der leitfähige Film (8) durch ein stromloses Plattieren gebildet wird.

## Revendications

1. Procédé de fabrication d'un composteur (10a, 10b) avec un motif concave-convexe pour un support d'enregistrement d'informations optique comprenant le fait de:
produire un maître (6) ayant un motif concave-convexe en exposant et en développant un substrat maître (3, 20, 30, 40) qui comprend un substrat (1) et une réserve (2) contenant un matériau inorganique;
former un film conducteur (8);
former une couche métallique (9) sur le film conducteur (8); et
décoller du maître (1) la couche métallique (9) seule ou la couche métallique (9) avec le film conducteur (8);
**caractérisé par** l'étape qui consiste à:
former une couche organique (7) sur le motif concave-convexe du maître (3), où le film conducteur (8) est formé sur la couche organique (7).

2. Procédé selon la revendication 1, dans lequel le matériau inorganique est un matériau thermosensible dont l'état change par un changement de température dû à l'exposition.

3. Procédé selon la revendication 1 ou 2, dans lequel la couche métallique (9) est formée par le biais d'un placage.

4. Procédé selon l'une quelconque des revendications 1 à 3, dans lequel la couche organique (7) est formée par un procédé de dépôt à la tournette.

5. Procédé selon la revendication 4, dans lequel la couche organique (7) comprend une résine phénolique, une résine acrylique, ou une résine de styrène.

6. Procédé selon la revendication 5, dans lequel la couche organique (7) comprend une résine photosensible dont le composant principal est la résine phénolique ou la résine acrylique.

7. Procédé selon la revendication 5, dans lequel une épaisseur de la couche organique (7) se trouve dans une gamme allant de 5nm à 60nm.

8. Procédé selon la revendication 6, dans lequel une épaisseur de la couche organique (7) se trouve dans une gamme allant de 5nm à 60nm.

9. Procédé selon la revendication 7, dans lequel l'épaisseur de la couche organique (7) se trouve dans une gamme allant de 15nm à 40nm.

10. Procédé selon la revendication 8, dans lequel l'épaisseur de la couche organique (7) se trouve dans une gamme allant de 15nm à 40nm.

11. Procédé selon l'une quelconque des revendications 1 à 3, dans lequel la couche organique (7) est formée par un processus sous vide.

12. Procédé selon la revendication 11, dans lequel un procédé de dépôt sous vide est utilisé comme le processus sous vide.

13. Procédé selon la revendication 12, dans lequel la couche organique (7) comprend une résine phénolique, une résine acrylique, une résine de styrène, une résine polyamide, une résine polyimide, une polyrésine, ou du polyuréthane.

14. Procédé selon la revendication 13, dans lequel une épaisseur de la couche organique (7) se trouve dans une gamme allant de 5nm à 60nm.

15. Procédé selon la revendication 14, dans lequel l'épaisseur de la couche organique (7) se trouve dans une gamme allant de 15nm à 60nm.

16. Procédé selon la revendication 12, dans lequel un procédé de polymérisation par dépôt de vapeur est utilisé comme le procédé de dépôt sous vide.

17. Procédé selon la revendication 16, dans lequel la couche organique (7) comprend un polyimide, de la polyrésine, ou un polyuréthane.

18. Procédé selon la revendication 17, dans lequel une épaisseur de la couche organique (7) se trouve dans une gamme allant de 3nm à 100nm.

19. Procédé selon la revendication 18, dans lequel l'épaisseur de la couche organique (7) se trouve dans une gamme allant de 10nm à 100nm.

20. Procédé selon l'une quelconque des revendications 1 à 19, dans lequel le matériau inorganique de la réserve (2) comprend au moins un matériau sélectionné à partir du groupe se composant d'éléments tel que Ge, Te, Sb, Se et Mo et des mélanges de ceux-ci, et des composés de ces éléments et des mélanges de ceux-ci.

21. Procédé selon la revendication 20, dans lequel le matériau inorganique de la réserve (2) comprend en plus au moins un matériau sélectionné parmi le groupe se composant de Au, Pt, Cu, Ag, Pd, et Si.

22. Procédé selon l'une quelconque des revendications 1 à 21, dans lequel une hauteur du motif concave-convexe du composteur (10a, 10b) se trouve dans une gamme de 12nm à 85nm.

23. Procédé selon l'une quelconque des revendications 1 à 22, dans lequel le film conducteur (8) est formé par un placage anélectrolytique,
